# EUROPÄISCHE PATENTSCHRIFT

(11) **EP 2 708 132 B1**
(45) Veröffentlichungstag und Bekanntmachung des Hinweises auf die Patenterteilung: **07.08.2019**
(21) Anmeldenummer: 13182611.7
(22) Anmeldetag: 02.09.2013
(51) Int. Cl.: A21C 7/01

(54) **Dreimotorige Wirktrommelanordnung**
Rounding drum assembly with three motors
Agencement de tambour de travaille à trois moteurs

(30) Priorität: 12.09.2012 DE 102012216201
(43) Veröffentlichungstag der Anmeldung: 19.03.2014
(73) Patentinhaber: WP Kemper GmbH, 33397 Rietberg (DE)
(72) Erfinder: Engelmeier, Christian, 33397 Rietberg (DE); Nolte, Manfred, 32839 Steinheim (DE)
(74) Vertreter: Rau, Schneck & Hübner Patentanwälte Rechtsanwälte PartGmbB

(56) Entgegenhaltungen:
- EP-A1- 0 391 017
- CH-A- 125 198
- DE-T2- 69 320 562
- DE-U1- 7 834 943
- US-A- 1 678 747

## Beschreibung

Die Erfindung betrifft eine Wirktrommelanordnung zur Bearbeitung von Teig und eine Wirkvorrichtung mit einer erfindungsgemäßen Wirktrommelanordnung.

Wirktrommeln, bei denen eine äußere Wirktrommel relativ zu einer inneren Wirktrommel im Rahmen eines Rundwirkvorgangs rotiert, sind aus dem Stand der Technik bekannt. So zeigt beispielsweise die DE 103 06 438 A1 eine Wirktrommelanordnung mit einer äußeren und einer inneren Wirktrommel, die relativ zueinander rotierbar sind. Ferner ist die äußere Trommel axial entlang einer Wirktrommelwellenachse bewegbar. Sowohl die Rotationsbewegungen der Wirktrommeln als auch die axiale Bewegung der äußeren Wirktrommel entlang der Wirktrommelwellenachse sind dabei durch einen einzigen Antriebsmotor angetrieben. Die Übertragung der Antriebskraft des Antriebsmotors auf die einzelnen Bewegungskomponenten erfolgt mittels Übertragungswellen bzw. -getrieben. Die Wirktrommelanordnung gemäß der DE 103 06 438 A1 ist durch die Gestaltung mit nur einem Antriebsmotor, aus dem sich drei Bewegungskomponenten ableiten, konstruktiv äußerst aufwendig. Durch eine derart aufwendige Gestaltung der Wirktrommelanordnung sind mehrere Getriebe und Wellen notwendig. Dies führt vor allem bei der Montage bzw. Demontage der Wirktrommelanordnung zu Problemen. Ferner ist es nachteilig, dass die einzelnen Bewegungskomponenten der Wirktrommelanordnung nicht direkt durch separate Antriebsvorrichtungen ansteuerbar sind. Ferner offenbart die DE 693 20 562 T2 eine Vorrichtung zur Herstellung von Kugeln von Teig oder ähnlichem Werkstoff mit einer Außentrommel und einer im Inneren der Außentrommel angeordneten Innentrommel, wobei sich die Rotationsbewegungen der Außentrommel und der Innentrommel von einem Motor ableiten. Ein zweiter Motor dient zu einer Linearbewegung einer mit der Innentrommel drehfest verbundenen Welle. Ferner ist ein Differenzial vorgesehen, das zur Einstellung des Hubs der Welle dient.

Es ist eine Aufgabe der vorliegenden Erfindung, eine Wirktrommelanordnung derart weiterzubilden, dass einzelne Bewegungskomponenten direkt ansteuerbar sind. Es soll auf Änderungen des Bearbeitungsprozesses, wie beispielsweise Änderung des Teiglinggewichts und/oder der Teiglinggröße, unmittelbar reagiert werden können. Dabei soll der Aufbau der Wirktrommelanordnung konstruktiv vereinfacht werden. Ferner soll eine Wirkvorrichtung weitergebildet werden.

Diese Aufgabe ist erfindungsgemäß gelöst durch eine Wirktrommelanordnung mit den im Anspruch 1 angegebenen Merkmalen und durch eine Wirkvorrichtung mit den im Anspruch 12 angegebenen Merkmalen.

Erfindungsgemäß wurde erkannt, dass eine Wirktrommelanordnung mit einer um eine Wirkdrehachse drehbaren Außentrommel mit Aufnahmedurchbrechungen zur Aufnahme von Teiglingen und einer in der Außentrommel koaxial gelagerten und relativ zu dieser drehbaren Innentrommel, dann zu besonders positiven Wirkergebnissen bei unterschiedlichen Teiglinggewichten und/oder Teiglinggrößen führt, wenn eine um die Wirkdrehachse rotierbare Wirkwelle vorgesehen ist, die durch eine erste Antriebsvorrichtung rotatorisch antreibbar ist und mit der Innentrommel drehfest in Verbindung steht und diese in Rotation um die Wirkdrehachse versetzt. Dabei dient eine zweite Antriebsvorrichtung zum rotierenden Antrieb der Außentrommel um die Wirkdrehachse und eine dritte Antriebsvorrichtung zur linearen Bewegung der Wirkwelle entlang der Wirkdrehdachse. Erfindungsgemäß sind die drei Antriebsvorrichtungen unabhängig voneinander antreibbar. Obwohl die Wirktrommelanordnung drei unabhängig voneinander antreibbare Antriebsvorrichtungen aufweist, kommt die erfindungsgemäße Wirktrommelanordnung mit nur einer einzigen Wirkwelle aus. Auf der Wirkwelle greifen die drei Antriebsvorrichtungen unabhängig voneinander an und erzeugen drei verschiedene Bewegungskomponenten, nämlich eine Rotationsbewegung der Innentrommel um die Wirkdrehachse, eine Rotationsbewegung der Außentrommel um die Wirkdrehachse und relativ zu Innentrommel sowie eine lineare Bewegung der Wirkwelle entlang der Wirkdrehachse. Jede der drei Bewegungskomponenten ist individuell mittels der Antriebsvorrichtungen kontrollierbar und auf unterschiedliches Wirkgut einstellbar. Die Wirktrommelanordnung weist eine Steuer- und Regeleinrichtung auf, welche mindestens zwei der nachfolgenden Größen durch Steuerung der Antriebsvorrichtungen aufeinander abstimmt: Drehzahl der Innentrommel, Drehzahl der Außentrommel und eine Amplitude des Axialhubs der Innentrommel. Ferner sind die Drehrichtungen der Außentrommel und der Innentrommel durch die Steuer- und Regeleinrichtung aufeinander abstimmbar. Durch eine derartige Steuer- und Regeleinrichtung sind die Bewegungskomponenten der Wirktrommelanordnung innerhalb sehr kurzer Zeit auf veränderte Wirkbedingungen einstellbar. Bei den veränderten Wirkbedingungen handelt es sich beispielsweise um ein verändertes Gewicht der zu wirkenden Teiglinge, veränderte Abmessungen der Teiglinge oder auch eine veränderte Rezeptur.

Gemäß Anspruch 2 ist mit der Wirkwelle eine erste Innentrommel-Abtriebscheibe drehfest verbunden, welche über ein erstes Lastübertragungsmittel durch die erste Antriebsvorrichtung zu einer Rotationsbewegung um die Wirkdrehachse antreibbar ist. Bei der ersten Antriebsvorrichtung handelt es sich vorzugsweise um einen an sich bekannten Elektromotor. Als Lastübertragungsmittel ist ein geeigneter endloser Riemen zu wählen. Der Riemen ist aus einem geeigneten Material gebildet. Als Material eignet sich beispielsweise Gummi oder eine Kunststoffkomposition, vorzugsweise mit einem verstärkten Kern. Durch den Antrieb der Wirkwelle durch die erste Antriebsvorrichtung mit einem derartigen Riementrieb wird ein besonders kostengünstiger Aufbau mit wenigen Bauteilen erreicht. Die Wirkwelle ist dabei durch die erste Antriebsvorrichtung unter verschiedenen Drehzahlen in zwei verschiedenen Drehrichtungen um die Wirkdrehachse antreibbar. Da die Innentrommel drehfest mit der Wirkwelle in Verbindung steht, sind somit auch eine Drehzahl und ein Drehsinn der Innentrommel variabel einstellbar.

Die Gestaltung nach Anspruch 3 sieht vor, dass auf der Wirkwelle ein Wälzlager angeordnet ist, welches mit der zweiten Antriebsvorrichtung in kraftübertragender Weise in Verbindung steht und um die Wirkdrehachse rotierbar ist, wobei das Wälzlager an eine senkrecht zur Wirkdrehachse verlaufende Seitenwand der Außentrommel angeflanscht ist. Durch diese Gestaltung ist der rotierende Antrieb der Außentrommel um die Wirkwelle ermöglicht, ohne dass die Wirkwelle durch die zweite Antriebsvorrichtung in Rotation versetzt wird. Durch diese Gestaltung ist eine Ansteuerung der Rotationsbewegungen der Innentrommel und der Außentrommel um die Wirkdrehachse unabhängig voneinander durch zwei verschiedene Antriebsvorrichtungen möglich. Die zweite Antriebsvorrichtung ist vorzugsweise ebenfalls als ein an sich bekannter Elektromotor ausgebildet.

Gemäß Anspruch 4 ist eine Außentrommel-Abtriebsscheibe an das Wälzlager angeflanscht, welche durch die zweite Antriebsvorrichtung über ein zweites Lastübertragungsmittel in Rotation um die Wirkdrehachse versetzbar ist. Als Lastübertragungsmittel ist vorzugsweise ein geeigneter zweiter Riemen zu verwenden, der entsprechend dem ersten Riemen gestaltet ist. Durch diese Gestaltung ist die Außentrommel-Abtriebsscheibe und damit die Außentrommel mit verschiedenen Drehzahlen und in zwei Drehrichtungen antreibbar.

Nach Anspruch 5 schließt sich die dritte Antriebsvorrichtung an eine von der Außentrommel und von der Innentrommel beabstandete Stirnwand der Wirkwelle an und wirkt mit der Stirnwand zur linearen Bewegung der Wirkwelle entlang der Wirkdrehachse zusammen. Durch eine Anordnung der dritten Antriebsvorrichtung an der ersten Stirnwand ist ein direktes Zusammenwirken der dritten Antriebsvorrichtung mit der Wirkwelle ermöglicht. Ferner greifen die drei Antriebsvorrichtungen entlang der Wirkdrehachse beabstandet voneinander an der Wirkwelle an.

Nach Anspruch 6 ist die dritte Antriebsvorrichtung als Linearaktor ausgebildet. Diese Gestaltung hat den Vorteil einer direkten Übertragung einer Linearbewegung von der dritten Antriebsvorrichtung auf die Wirkwelle entlang der Wirkdrehachse. Der Linearaktor ermöglicht einen genauen und einstellbaren Axialhub der mit der Wirkwelle verbundenen Innentrommel entlang der Wirkdrehachse. Vorzugsweise ist der Linearaktor derart angeordnet, dass ein Stellglied des Linearaktors in Form eines stangenförmigen Läufers eine Verlängerung der Wirkwelle entlang der Wirkdrehachse im bereich der ersten Stirnwand bildet. Der Läufer ist dabei vorzugsweise über eine Flanschverbindung mit der ersten Stirnwand der Wirkwelle verbindbar.

Nach Anspruch 7 ist die dritte Antriebsvorrichtung über einen Umlenkmechanismus mit der Wirkwelle verbunden, wobei der Umlenkmechanismus einen Umlenkhebel umfasst, der das Stellglied des Linearaktors mit der Wirkwelle verbindet. Der Umlenkhebel erstreckt sich dabei vorzugsweise senkrecht zur Wirkdrehachse. Diese Gestaltung des Umlenkmechanismus wird einem Umlenkhebel ermöglicht eine Anordnung des Linearaktors in einem Bereich unterhalb, oberhalb oder seitlich der Außentrommel. Dies hat gegenüber einer Anordnung des Linearaktors entlang der Wirkdrehachse den Vorteil, dass der Linearaktor platzsparend in der Wirktrommelanordnung anordenbar ist.

Nach Anspruch 8 ist die Wirkwelle als Keilwelle ausgebildet. Diese Gestaltung ermöglicht einen Formschluss zwischen der Wirkwelle und den Abtriebsscheiben bzw. den Wälzlagern ohne zusätzliche Befestigungsmittel. Die Keilwelle weist zu diesem Zweck vorzugsweise eine Vielzahl von Mitnehmern auf. Die Mitnehmer sind vorzugsweise als parallel zur Wirkdrehachse auf der Wirkwelle verlaufende Flanken gestaltet. Die Mitnehmer der Keilwelle übertragen über Anlageflächen ein Drehmoment formschlüssig. Die Verwendung einer Keilwelle als Wirkwelle hat des Weiteren den großen Vorteil, dass die Wirkwelle bei entsprechender Wahl der Passung einer auf der Wirkwelle angeordneten Nabe axial entlang der Wirkdrehachse verschiebbar ist. Die axiale Verschiebbarkeit der Wirkweile ist in erster Linie aufgrund der durch die dritte Antriebsvorrichtung bewirkte Linearbewegung der Wirkwelle entlang der Wirkdrehachse von großer Bedeutung.

Gemäß Anspruch 9 weist jede der drei Antriebsvorrichtungen eine eigene Energiequelle auf. Vorzugsweise handelt es sich bei den Antriebsvorrichtungen um elektrisch betriebene Motoren.

Nach Anspruch 10 erfolgt die Steuerung der Antriebsvorrichtungen in Abhängigkeit eines Gewichts der zu wirkenden Teiglinge. Durch Anpassung der Drehzahlen und Drehrichtungen der Innentrommel und der Außentrommel lässt sich eine kreisförmige Wirkbewegung der Innentrommel zur Außentrommel verwirklichen. Je nach der Art der Teiglinge ist der Unterschied in den Drehzahlen zwischen der Innentrommel und der Außentrommel vorzugeben. Neben der Drehzahl ist auch der Drehsinn der Innentrommel und der Außentrommel mittels Ansteuerung der ersten und der zweiten Antriebsvorrichtung in Abhängigkeit vom Teiglinggewicht besonders schnell und einfach änderbar. Das Teiglinggewicht ist durch eine geeignete Messeinrichtung vorteilhafterweise vor der Zuführung der Teiglinge zur Wirktrommelanordnung zu messen. Beispielsweise im Bereich einer Teigteil- und Portioniereinrichtung. Alternativ kann auch die Innentrommel derart ausgebildet sein, dass sie ein Gewicht der auf ihr während des Wirkvorgangs aufliegenden Teiglinge erfasst und an die Steuer- und Regeleinrichtung weitergibt. Zu Gewichtsmessung eignen sich beispielsweise an sich bekannte Kraftmessdosen.

Nach Anspruch 11 steuert die Steuer- Regeleinrichtung den Linearaktor an. Durch diese Gestaltung ist die Amplitude des Axialhubs der Innentrommel variabel auf veränderliche Wirkbedingungen anpassbar.

Nachfolgend wird unter Bezugnahme auf die beigefügte Zeichnung eine bevorzugte Ausführungsform der Erfindung beispielhaft beschrieben. Dabei zeigen:
- Fig. 1: eine schematische Seitenansicht einer Teigbearbeitungsmaschine;
- Fig. 2: eine perspektivische Ansicht einer Wirktrommelanordnung der Teigbearbeitungsmaschine in Fig. 1; und
- Fig. 3: eine isolierte Schnittdarstellung einer Innentrommel, einer Außentrommel und einer Wirkwelle der Wirktrommelanordnung gemäß Fig. 2.

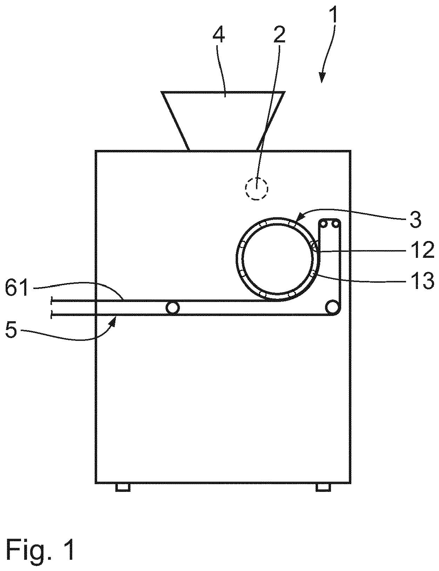

Einander entsprechende Teile sind in den Fig.1 bis 3 mit denselben Bezugszeichen versehen. Auch Einzelheiten des im Folgenden näher erläuterten Ausführungsbeispiels können für sich genommen eine Erfindung darstellen oder Teil eines Erfindungsgedankens sein.

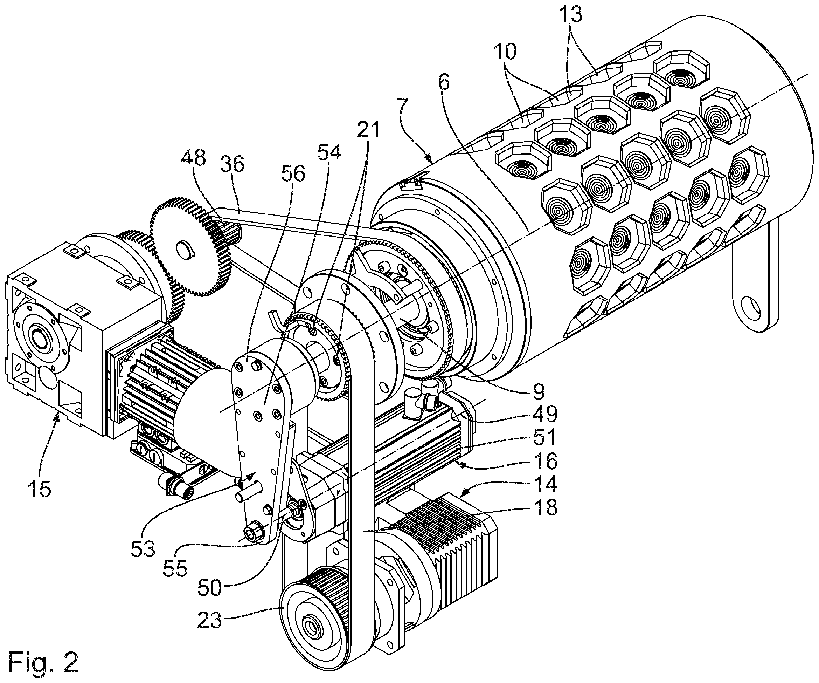

Die nachfolgend verwendeten Ausdrücke "innen", "außen", "oben", "unten" oder dergleichen beziehen sich auf die bestimmungsgemäße Anordnung der Wirktrommelanordnung wie sie in Fig. 2 gezeigt ist.

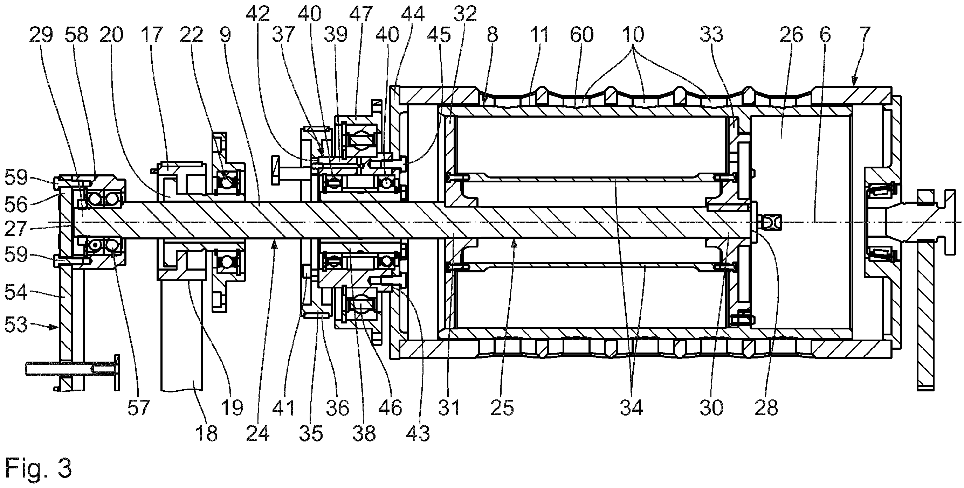

Fig.1 zeigt eine Teigbearbeitungsmaschine 1 einer Teigbearbeitungsanlage zur Bearbeitung von Teig mit einer internen, lediglich schematisch angedeuteten Teigteil- und Portioniereinrichtung 2 und einer Wirktrommelanordnung 3 zum Wirken des Teiges. Der Teig wird der Teigbearbeitungsmaschine 1 über einen Aufgabetrichter 4 zugeführt. In einer Förderrichtung gewirkter Teiglinge der Wirktrommelanordnung 3 nachgeordnet ist ein Förderband 5, welches die gewirkten Teiglinge an ein Gehänge eines nicht dargestellten Gärschranks weitergibt. Die Wirktrommelanordnung ist im Detail in den Fig. 2 und Fig. 3 dargestellt.

Die Wirktrommelanordnung zum Wirken des Teiges umfasst eine um eine Wirkdrehachse 6 drehbare hohlzylindrische Außentrommel 7 und eine koaxial in der Außentrommel 7 gelagerte und relativ zu dieser drehbaren Innentrommel 8, die ebenfalls hohlzylindrisch ausgebildet ist. Die Innentrommel 8 wird auch als Wirktrommel und die Außentrommel 7 als Kammertrommel bezeichnet. Die Innentrommel 8 ist relativ zur Außentrommel 7 drehbar an einer sich entlang der Wirkdrehachse 6 erstreckenden Wirkwelle 9 gelagert. Die Innentrommel 8 ist ferner entlang der Wirkdrehachse 6 axial verschiebbar angeordnet, um eine kreisende, spiralförmige Bewegung der Innentrommel in Bezug zur Außentrommel 7 zu ermöglichen. Eine Längserstreckung der Innentrommel 8 entlang der Wirkdrehachse 6 ist geringer als eine Längserstreckung der Außentrommel 7 entlang der Wirkdrehachse 6, um eine axiale Bewegung der Innentrommel 8 innerhalb der Außentrommel 7 entlang der Wirkdrehachse 6 zu ermöglichen.

Die Außentrommel 7 weist an sich bekannte Aufnahmedurchbrechungen 10 zur Aufnahme des zu wirkenden Teiges auf, welche nach außen und nach innen offen sind. Nach innen sind die Aufnahmedurchbrechungen durch einen Außenmantel 11 der Innentrommel 8 begrenzt, auf welchem der Teig beim Wirken aufliegt. Nach außen sind die Aufnahmedurchbrechungen 10 beim Wirken begrenzt durch ein Wirktrum 12 des Förderbandes 5, welches in einem Umfangsabschnitt an der Außentrommel 7 anliegt. Durch die im Umfangsabschnitt durch das Wirktrum 12 begrenzten Aufnahmedurchbrechungen 10 sind Wirkkammern 13 gebildet, wobei jede der Wirkkammern 13 zur Aufnahme eines Teiglings dient. Die Innentrommel 8 und die Außentrommel 7 führen zum Wirken der Teigs relativ zueinander Wirkbewegungen durch, welche durch die nachfolgend beschriebenen Antriebsvorrichtungen 14, 15, 16 angetrieben sind.

Die erste Antriebsvorrichtung 14 treibt in der gezeigten Ausführungsvariante der Wirktrommelanordnung 3 die Wirkwelle 9 zur Rotation um die Wirkdrehachse 6 an.

Die Wirkwelle 9 steht mit der Innentrommel 8 drehfest in Verbindung und versetzt die Innentrommel 8 mit einer Innentrommel-Drehzahl in Rotation um die Wirkdrehachse 6. Die Wirkwelle 9 ist als Keilwelle ausgebildet und weist zu diesem Zweck vorzugsweise mehrere Mitnehmer auf, die vorzugsweise als parallel zur Wirkdrehachse 6 auf der Wirkwelle 9 verlaufende Flanken gestaltet sind.

Zur kraftübertragenden Verbindung mit der ersten Antriebsvorrichtung 14 ist die Wirkwelle 9 mit einer Innentrommel-Abtriebsscheibe 17 drehfest verbunden. Die Innentrommel-Abtriebsscheibe 17 ist über ein erstes Lastübertragungsmittel 18 in Form eines ersten endlosen Riemens durch die erste Antriebsvorrichtung 14 zu einer Rotationsbewegung um die Wirkdrehachse 6 angetrieben ist. Als Material für den Riemen eignet sich beispielsweise Gummi oder eine Kunststoffkomposition, vorzugsweise mit einem verstärkten Kern.

Bei der ersten Antriebsvorrichtung 14 handelt es sich vorzugsweise um einen an sich bekannten Elektromotor, der in zwei unterschiedlichen Drehrichtungen mit verschiedenen Drehzahlen antreibbar ist.

Wie insbesondere Fig. 2 zu entnehmen, ist die Innentrommel-Abtriebsscheibe 17 in dem gezeigten Ausführungsbeispiel mit einer gezahnten Außenkontur 19 als Zahnrad ausgebildet. Alternativ kann die Innentrommel-Abtriebscheibe 17 auch als Keilriemenscheibe ausgebildet sein. Durch die Ausbildung der Innentrommel-Abtriebsscheibe 17 als Zahnrad bzw. als Keilriemenscheibe, wird bei entsprechender Ausgestaltung des als Riemen ausgebildeten ersten Lastübertragungsmittels 18 die Reibung zwischen Innentrommel-Abtriebsscheibe 17 und Lastübertragungsmittel 18 erhöht, wodurch der Antrieb der Wirkwelle 9 durch die erste Antriebsvorrichtung 14 weiter verbesserbar ist.

In der gezeigten Ausführungsvariante ist die Innentrommel-Abtriebsscheibe 17 mittels einer ersten Nabe 20 mit der Wirkwelle 9 drehfest verbunden. Die Innentrommel-Abtriebsscheibe 17 ist mit der Nabe 20 vorzugsweise mittels Schrauben 21 verbunden, wobei die Schrauben 21 in Einschraubposition eine Längserstreckung parallel zur Wirkdrehachse 6 aufweisen

Die drehfeste Verbindung zwischen der ersten Nabe 20 und der Wirkwelle 9 ist durch die Gestaltung der Wirkwelle 9 als Keilwelle ermöglicht, wobei die Mitnehmer der Wirkwelle 9 in Keil-Nuten der Nabe 20 eingreifen und dadurch die Rotationsbewegung beziehungsweise ein Drehmoment der Nabe 20 auf die Wirkwelle 9 durch Formschluss übertragbar ist. Die Dimensionierung der Keil-Nuten der Nabe 20 ist so auf die Dimensionierung der Mitnehmer der Wirkwelle 9 anzupassen, das eine Mitnahme der Wirkwelle 9 durch die Nabe 20 ohne Spiel erfolgt. Durch eine derartige Keilwelle-Nabe-Verbindung ist ein axiales Verschieben der Wirkwelle 9 entlang der Wirkdrehachse 6 innerhalb der Nabe 20 ermöglicht, wobei die Nabe 20 als Führung der Wirkwelle 9 entlang deren Axialbewegung dient.

In dem gezeigten Ausführungsbeispiel ist auf der ersten Nabe 20 benachbart zur Innentrommel-Abtriebsscheibe 17 ein erstes Wälzlager 22 angeordnet, welches zur Lagerung der Wirkwelle 9 in einem Innenraum der Teigbearbeitungsmaschine 1 dient. Das erste Wälzlager 22 ermöglicht eine Rotation der Wirkwelle 9 um die Wirkdrehachse 6 und eine axiale Bewegung der Wirkwelle 9 entlang der Wirkdrehachse 6. Bei dem ersten Wälzlager 22 handelt es sich vorzugsweise um ein an sich bekanntes Kugellager, dessen Aufbau nicht näher beschrieben wird.

Die Innentrommel-Abtriebsscheibe 17 überträgt mittels des Riemens 18 die Drehzahl einer ersten Motorwellen-Antriebsscheibe 23 der als Elektromotor ausgebildeten ersten Antriebsvorrichtung 14 auf die Wirkwelle 9. In dem gezeigten Ausführungsbeispiel der Wirktrommelanordnung 3 ist die erste Antriebsvorrichtung 14 in Form eines Elektromotors in einem Bereich unterhalb der Wirkwelle 9 bzw. unterhalb der Außentrommel 7 angeordnet. Alternativ ist es grundsätzlich auch möglich, die erste Antriebsvorrichtung 14 seitlich der Außentrommel 7 bzw. oberhalb der Außentrommel 7 bzw. Wirkwelle 9 anzuordnen.

Die Innentrommel-Abtriebsscheibe 17 greift mittels der ersten Nabe 20 in einem Außenbereich 24 der Wirkwelle 9, der außerhalb der Innentrommel 8 und der Außentrommel 7 verläuft, an der Wirkwelle 9 an. Ein Innenbereich 25 der Wirkwelle 9 verläuft in einem Innenraum 26 der Außentrommel 7. Die als Keilwelle ausgebildete Wirkwelle 9 umfasst ferner eine von der Außentrommel 7 und der Innentrommel 8 beabstandet angeordnete und senkrecht zur Wirkdrehachse 6 verlaufende erste Stirnwand 27 und eine im Innenbereich 25 senkrecht zur Wirkdrehachse 6 angeordnete zweite Stirnwand 28. An die erste Stirnwand 27 schließt sich ein erster Endbereich 29 und an die zweite Stirnwand 28 ein zweiter Endbereich 30 der Wirkwelle 9 an. In etwas auf halben Weg entlang der Wirkdrehachse 6 zwischen erster Stirnwand 27 und zweiter Stirnwand 28 umfasst die Wirkwelle einen Mittelbereich 31.

In dem Mittelbereich 31 der Wirkwelle 9 ist die Innentrommel 8 mittels eines ersten Übertragungsgliedes 32, welches eine erste Stirnwand der Innentrommel 8 bildet, mit der Innentrommel 8 drehfest verbunden. Im zweiten Endbereich 30 ist die Wirkwelle 9 über ein zweites Übertragungsglied 33, welches eine zweite Stirnwand der Innentrommel 8 bildet, mit der Innentrommel 8 drehfest verbunden.

Die Übertragungsglieder 32, 33 übertragen zum einen die Rotationsbewegung der Wirkwelle 9 um die Wirkdrehachse 6 auf die Innentrommel 8 und zum anderen, wie später beschrieben, eine durch die dritte Antriebsvorrichtung 16 bewirkte lineare Bewegung der Wirkwelle 9 entlang der Wirkdrehachse 6 in Form eines Axialhubs. Die Übertragungsglieder 32, 33 dienen folglich zur Übertragung von zwei Bewegungskomponenten auf die Innentrommel 8.

Die Übertragungsglieder 32, 33 sind auf der Wirkwelle 9 innerhalb des Innenraums 26 der Außentrommel 7 jeweils über eine an sich bekannte Welle-Nabe-Verbindung drehfest mit der Wirkwelle 9 verbunden. Die verwendete Welle-Nabe-Verbindung ist derart gestaltet, dass die Übertragungsglieder 32, 33 gegen eine axiale Bewegung relativ zur Wirkwelle 9 gesichert sind.

Die Übertragungsglieder 32, 33 sind vorzugsweise als Übertragungsscheiben ausgebildet, die sich radial von der Wirkwelle 9 weg in Richtung Innentrommel 8 erstrecken. Ein Durchmesser der Übertragungsscheiben 32, 33 entspricht vorzugsweise einem Innendurchmesser der Innentrommel 8. Die Übertragungsglieder 32, 33 stützen die Innentrommel 8 gegenüber der Wirkwelle 9 ab. Wie Fig. 3 zu entnehmen, erstrecken sich zwischen den Übertragungsgliedern 32, 33 parallel zur Wirkdrehachse 6 zwei Stützleisten 34, welche die Übertragungsglieder 32, 33 im Innenraum 26 parallel zur Wirkdrehachse 6 miteinander verbinden. Die Stützleisten 34 dienen zu einer Stabilisierung der Übertragungsglieder 32, 33 während einer Bewegung derselbigen entlang der Wirkdrehachse 6. In von der Wirkwelle 9 beabstandeten Endbereichen sind die Übertragungsglieder 32, 33 fest mit der Innentrommel 8 verbunden. Es ist auch möglich, die Übertragungsglieder 32, 33 einstückig mit der Innentrommel 8 auszubilden.

Auf der Wirkwelle 9 ist im Mittelbereich 31 zwischen dem ersten Wälzlager 22 und dem ersten Übertragungsglied 32 eine Außentrommel-Abtriebsscheibe 35 drehfest angeordnet. Die Außentrommel-Abtriebsscheibe 35 ist durch die zweite Antriebsvorrichtung 15 über ein zweites Lastübertragungsmittel 36 in Form eines zweiten endlosen Riemens in Rotation um die Wirkdrehachse 6 mit einer Außentrommel-Drehzahl antreibbar.

Die Außentrommel-Abtriebsscheibe 35 ist entsprechen der Innentrommel-Abtriebsscheibe 17 als Zahnrad bzw. als Keilriemenscheibe ausgebildet. Bei entsprechender Ausgestaltung des zweiten Riemens 36 ist die Reibung zwischen Außentrommel-Abtriebsscheibe 35 und die Riemen 36 verbessert. Wie insbesondere Fig. 3 zu entnehmen, ist die Außentrommel-Abtriebsscheibe 35 nicht unmittelbar auf der Wirkwelle 9 angeordnet, sondern über ein zweites Wälzlager 37 mit der Wirkwelle 9 verbunden.

Das zweite Wälzlager 37 umfasst einen drehfest mit der Wirkwelle 9 verbundenen Innenring 38, der eine zweite Nabe bildet. Die als Innenring 38 ausgebildete zweite Nabe umfasst Keil-Nuten, in welche die Mitnehmer der Wirkwelle 9 eingreifen, wodurch die Rotationsbewegung der Wirkwelle 9 um die Wirkdrehachse 6 auf die zweite Nabe 38 übertragbar ist. Die als Innenring 38 des zweiten Wälzlagers 37 ausgebildete zweite Nabe ermöglicht das axiale Verschieben der Wirkwelle 9 entlang der Wirkdrehachse 6 innerhalb des Innenrings 38, wobei der Innenring 38 als radiale Führung für die Wirkwelle 9 in deren Mittelbereich 31 dient.

Zwischen dem Innenring 38 des zweiten Wälzlagers 37 und einem Mittelring 39 sind wie an sich bekannt, Wälzkörper 40, vorzugsweise in der Form von Kugeln, gelagert.

Die Außentrommel-Abtriebsscheibe 35 ist vorzugsweise über mehrere Schrauben 41 an das zweite Wälzlager 37 Bereich des Mittelrings 39 angeflanscht. Die Schrauben 41 durchsetzen in einer Einschraubposition die Außentrommel-Abtriebsscheibe 35 vorzugsweise parallel zur Wirkdrehachse 6 und dringen bereichsweise in den Mittelring 39 ein, wodurch die Außentrommel-Abtriebsscheibe 35 mit dem Mittelring 39 drehverbunden ist. Die Außentrommel-Abtriebsscheibe 35 ist an einer von dem ersten Übertragungsglied 32 abgewandten und senkrecht zur Wirkdrehachse 6 verlaufenden Außenseite 42 des zweiten Wälzlagers 37 angeordnet.

An einer dem ersten Übertragungsglied 32 zugewandten zweiten Außenseite 43, die ebenfalls senkrecht zur Wirkdrehachse 6 verläuft, ist das zweite Wälzlager 37 mit einem dritten Übertragungsglied 44 verbunden. Das dritte Übertragungsglied 44 überträgt die von der Außentrommel-Abtriebsscheibe 35 an den Mittelring 39 übertragene Rotationsbewegung um die Wirkdrehachse 6 an die Außentrommel 7.

Das dritte Übertragungsglied 44 ist in der gezeigten Ausführungsvariante als Übertragungsscheibe ausgebildet, die sich senkrecht zur Wirkdrehachse 6 radial von dieser wegerstreckt und an von der Wirkwelle 9 beabstandeten Außenbereichen mit der Außentrommel 7 verbunden ist. Das dritte Übertragungsglied 44 bildet eine senkrecht zur Wirkdrehachse 6 verlaufende Seitenwand der Außentrommel 7. Es ist auch möglich, das dritte Übertragungsglied 44 einstückig mit der Außentrommel 7 auszubilden. Das dritte Übertragungsglied 44 verläuft parallel zu dem ersten Übertragungsglied 32 und dem zweiten Übertragungsglied 33.

Das dritte Übertragungsglied 44 dient dazu, die Rotationsbewegung der durch die zweite Antriebsvorrichtung 15 angetriebenen Außentrommel-Abtriebsscheibe 35 auf die Außentrommel 7 zu übertragen. Der um die Wirkdrehachse 6 rotierbare Mittelring 39 des zweiten Wälzlagers 37 dient dabei als weiteres Übertragungsglied der Rotationsbewegung der Außentrommel-Abtriebsscheibe 35 zum dritten Übertragungsglied 44. Der Mittelring 39 ist zu diesem Zweck, wie Fig. 3 zu entnehmen, über Schrauben 45 mit dem als Übertragungsscheibe ausgebildeten dritten Übertragungsglied 44 verbunden. Die Schrauben 45 durchsetzen in einer Einschraubposition das dritte Übertragungsglied 44 parallel zur Wirkdrehachse 6 und dringen bereichsweise in den Mittelring 39 ein, wodurch das dritte Übertragungsglied 44 mit dem Mittelring 39 drehverbunden ist

Radial in Bezug zur Wirkwelle 9 sind auf dem Mittelring 39 umlaufend weitere Wälzkörper 46 gelagert, mittels derer ein Außenring 47 rotierbar um die Wirkdrehachse 6 gelagert ist. Bei dem zweiten Wälzlager 37 handelt es sich vorzugsweise um ein Dreiringlager mit drei konzentrischen Laufringen, nämlich dem Innenring 38, dem Mittelring 39 und dem Außenring 47. Die Wälzkörper 40, 46 sind dabei konzentrisch um die Wirkdrehachse 6 zwischen den Laufringen 38, 39, 47 gelagert. Der Außenring 47 dient zur Lagerung des zweiten Wälzlagers 37 in der Teigbearbeitungsmaschine 1.

In dem gezeigten Ausführungsbeispiel der Wirktrommelanordnung 3 ist die zweite Antriebsvorrichtung 15 zum Antrieb der Außentrommel-Abtriebsscheibe 35 seitlich der Außentrommel 7 bzw. seitlich der Wirkwelle 9 angeordnet. Die zweite Antriebsvorrichtung 15 ist in dem gezeigten Ausführungsbeispiel durch einen zweiten Elektromotor gebildet, der eine Antriebswelle 48 umfasst, auf welcher der Riemen 36 geführt ist, der die Außentrommel-Abtriebsscheibe 35 in Rotation um die Wirkdrehachse 6 versetzt. Die zweite Antriebsvorrichtung 15 in Form eines zweiten Elektromotors ist vorzugsweise in zwei unterschiedlichen Richtungen mit unterschiedlichen Drehzahlen antreibbar.

Die dritte Antriebsvorrichtung 16 zur linearen Bewegung der Wirkwelle 9 und damit der Innentrommel 8 entlang der Wirkdrehachse 6 ist als Linearaktor ausgebildet. In der gezeigten Ausführungsvariante ist der Linearaktor 16 in einem Bereich unterhalb des Außenbereichs 24 der Wirkwelle 9 derart angeordnet, dass sich eine Mittelachse 49 eines stangenförmigen Läufers 50 parallel unterhalb der Wirkdrehachse 6 erstreckt. Der Läufer 50 bildet das Stellglied des Linearaktors 16. Bei dem Linearaktor 16 handelt es sich um einen an sich bekannten Aktor, der neben dem Läufer 50 einen in einem Statorgehäuse 51 angeordneten Stator umfasst.

Der Läufer 50 des Linearaktors 16 ist in dem gezeigten Ausführungsbeispiel über einen Umlenkmechanismus 53 mit der Wirkwelle 9 in deren Endbereich 29 verbunden. Der Umlenkmechanismus 53 umfasst einen Umlenkhebel 54 in Form einer Umlenkplatte, welche sich in einer Ebene senkrecht zur Wirkdrehachse 6 erstreckt. Der Umlenkhebel 54 umfasst einen ersten Endbereich 55 und einen zweiten Endbereich 56, wobei der erste Endbereich 55 mit dem als Stellglied dienenden Läufer 50 und der zweite Endbereich 56 mit der Wirkwelle 9 verbunden ist. Der plattenförmige Umlenkhebel 54 steht mit der ersten Stirnwand 27 der Wirkwelle 9 in Kontakt.

Eine lineare Bewegung des Läufers 50 entlang der Mittelachse 49 wird durch den Umlenkmechanismus 53 in eine Bewegung der Wirkwelle 9 entlang der Wirkdrehachse 6 übersetzt. Die lineare Bewegung der Wirkwelle 9 entlang der Wirkdrehachse 6 stellt die dritte Bewegungskomponente der Wirktrommelanordnung 3 dar, wobei die lineare Bewegung der Wirkwelle 9 entlang der Wirkdrehachse 6 eine Amplitude eines Axialhubs der Innentrommel 8 entlang der Wirkdrehachse 6 vorgibt.

Wie den Fig. 2 und Fig. 3 zu entnehmen, ist im ersten Endbereich 29 benachbart zur ersten Stirnwand 27 ein drittes Wälzlager 57 an der Wirkwelle 9 angeordnet. Dabei ist ein Außenring 58 mit dem Umlenkhebel 54 fest verbunden. In dem gezeigten Ausführungsbeispiel dienen Schrauben 59, welche in einer Einschraubposition eine Längserstreckung parallel zur Wirkdrehachse 6 aufweisen, zur Verbindung des Umlenkhebels 54 mit dem Außenring 58. Das dritte Wälzlager 57 ist über eine an sich bekannte Welle-Nabe-Verbindung mit der Wirkwelle 9 im ersten Endbereich 29 verbunden, wobei diese Welle-Nabe-Verbindung eine Relativbewegung des dritten Wälzlagers 57 zur Wirkwelle 9 entlang der Wirkdrehachse 6 verhindert.

Die Wirktrommelanordnung 3 umfasst ferner eine nicht dargestellte Steuer- und Regeleinrichtung mit welcher die Drehzahl der Innentrommel 8, die Drehzahl der Außentrommel 7 und die Amplitude des Axialhubs der Innentrommel 8 aufeinander abstimmbar sind. Die Abstimmung dieser Größen erfolgt durch eine Steuerung der Antriebsvorrichtungen 14, 15, 16. Die Steuerung der Antriebsvorrichtungen 14, 15, 16 erfolgt vorteilhafterweise in Abhängigkeit eines Gewichts der zu wirkenden Teiglinge bzw. in Abhängigkeit der Rezeptur der Teiglinge. Hierzu ist durch Ansteuerung der jeweiligen Antriebsvorrichtung 14, 15, 16 der Drehsinn der Innentrommel 7 bzw. der Außentrommel 8 sowie die Drehzahlen derselbigen aufeinander abstimmbar.

Nachfolgend wird die Funktionsweise der Wirktrommelanordnung anhand der Abbildungen Fig. 1 bis Fig. 3 näher beschrieben.

Die ungeformten Teiglinge werden in der Teigbearbeitungsmaschine 1 über die Teigteil- und Portioniereinrichtung 2 in die Wirkkammern 13 in einem oberen, dem Aufgabetrichter 4 benachbarten Bereich der Außentrommel 7 zugeführt. In den Wirkkammern 13 dienen vorzugsweise an dem Außenmantel 11 der Innentrommel 8 vorgesehene Vertiefungen 60 zur Positionierung der Teiglinge in den Wirkkammern 13. Jeder der Aufnahmedurchbrechungen 10 des Außenmantels 11 ist eine Vertiefung 60 der Innentrommel 8 zugeordnet.

Sobald die ungeformten Teiglinge in den Wirkkammern 13 angeordnet sind, erfolgt das Rundwirken der Teiglinge in an sich bekannter Weise durch die Rotation der Außentrommel 7 und der Innentrommel 8 und durch die Amplitude des Axialhubs der Innentrommel 8. Durch diese drei Bewegungskomponenten führt die Innentrommel 8 in Bezug zur Außentrommel 7 eine kreisende Bewegung aus, wodurch das Rundwirken der Teiglinge ermöglicht ist.

Die Ansteuerung der Rotationsbewegungen der Innentrommel 8 und der Außentrommel 7 um die Wirkdrehachse 6 erfolgt dabei unabhängig voneinander durch die erste Antriebsvorrichtung 14 bzw. durch die zweite Antriebsvorrichtung 15. Die Änderung der Drehzahlen bzw. des Drehsinns der Wirktrommeln 7, 8 erfolgt dabei unmittelbar durch Ansteuerung der Antriebsvorrichtungen 14, 15 durch die Steuer- und Regeleinrichtung. Der Axialhub der Innentrommel 8 wird unmittelbar durch die als Linearaktor ausgebildete dritte Antriebsvorrichtung 16 gesteuert. Der Axialhub der Innentrommel 8 wird dabei durch eine Bewegung des Läufers 50 des Linearaktors entlang dessen Mittelachse 49 gesteuert. Als Übersetzungselement der Bewegung des Läufers 50 in den Axialhub der Innentrommel 8 entlang der Wirkdrehachse 6 dient der Umlenkmechanismus 53.

Durch die erfindungsgemäße Anordnung von Wälzlagern 22, 37, 57 und Naben 20 an der Wirkwelle 9 ist ein Axialhub der Wirkwelle 9 entlang der Wirkdrehachse 6 bei gleichzeitiger Rotation der Wirkwelle 9 um die Wirkdrehachse 6 ermöglicht. Die Rotationsbewegung der Außentrommel 7 und die Rotationsbewegung der Innentrommel 8 relativ zueinander um die Wirkdrehachse 6 und die Amplitude des Axialhubs der Innentrommel 8 entlang der Wirkdrehachse 6 werden mittels der Steuer- und Regeleinrichtung derart aufeinander abgestimmt, dass die Vertiefungen 60 des Außenmantels 11 der Innentrommel 8 eine kreisförmige Bewegung relativ zu den Aufnahmedurchbrechungen 10 durchführen. Die in den Wirkkammern 13 befindlichen Teiglinge werden so rund gewirkt.

Der Drehsinn und die Drehzahlen der Außentrommel 7 und der Innentrommel 8 sind ebenso wie der Axialhub der Innentrommel 8 von den zu wirkenden Teiglingen abhängig. Je nach Teiglingart sind die genannten Bewegungskomponenten durch Ansteuerung der Antriebsvorrichtungen 14, 15, 16 durch die Steuer- und Regeleinrichtung variabel veränderbar. Der Axialhub der Innentrommel 8 lässt sich beispielsweise dadurch verändern, dass eine Wegstrecke des Läufers 50 entlang der Mittelachse 49 des Linearaktors 16 verändert wird. Eine derartige Veränderung führt unmittelbar zu einer veränderten Amplitude des Axialhubs der Innentrommel 8. Durch die erfindungsgemäße Wirktrommelanordnung lassen sich verschiedene Bewegungskomponenten schnell und direkt an geänderte Bedingungen anpassen.

Nach dem Rundwirken verlassen die Teiglinge die Wirkkammern 13 und werden auf ein Fördertrum 61 des Förderbandes 5 der Teigbearbeitungsmaschine 1 übergeben und dort zu dem Gehänge des Gärschrank befördert.

## Patentansprüche

1. Wirktrommelanordnung (3) zur Bearbeitung von Teig mit
a) einer um eine Wirkdrehachse (6) drehbaren Außentrommel (7) mit Aufnahmedurchbrechungen (10) zur Aufnahme von Teiglingen,
b) einer in der Außentrommel (7) koaxial gelagerten und relativ zu dieser drehbaren Innentrommel (8), wobei
c) die Aufnahmedurchbrechungen (10) Wirkkammern (13) ausbilden, indem
i) die Aufnahmedurchbrechungen (10) nach innen durch einen Außenmantel der Innentrommel (8) und
nach außen beim Wirken durch ein in einem Umfangsabschnitt der Außentrommel (6) anliegendes Wirktrum (12) eines Förderbandes begrenzt sind,
d) einer um die Wirkdrehachse (6) rotierbaren Wirkwelle (9), die
i) durch eine erste Antriebsvorrichtung (14) rotatorisch antreibbar ist und
ii) mit der Innentrommel (8) drehfest in Verbindung steht und diese in Rotation um die Wirkdrehachse (6) versetzt,
e) einer zweiten Antriebsvorrichtung (15) zum rotierenden Antrieb der Außentrommel (7) um die Wirkdrehachse (6), und
f) einer Steuer- und Regeleinrichtung, welche mindestens zwei der nachfolgenden Größen durch Steuerung der Antriebsvorrichtungen aufeinander abstimmt:
- eine Drehzahl der Innentrommel (8),
- eine Drehzahl der Außentrommel (7) und
- eine Amplitude eines Axialhubs der Innentrommel (8),
**dadurch gekennzeichnet, dass** die Wirktrommelanordnung
g) eine dritte Antriebsvorrichtung (16) zur linearen Bewegung der Wirkwelle (9) entlang der Wirkdrehachse (6) aufweist,
und dass
h) die drei Antriebsvorrichtungen (14, 15, 16) unabhängig voneinander antreibbar sind.

2. Wirktrommelanordnung (3) nach Anspruch 1, **dadurch gekennzeichnet, dass** mit der Wirkwelle (9) eine Innentrommel-Abtriebscheibe (17) drehfest verbunden ist, welche über ein erstes Lastübertragungsmittel (18) durch die erste Antriebsvorrichtung (14) zu einer Rotationsbewegung um die Wirkdrehachse (9) antreibbar ist.

3. Wirktrommelanordnung (3) nach Anspruch 1 oder 2, **dadurch gekennzeichnet, dass** auf der Wirkwelle (9) ein Wälzlager (37) angeordnet ist, welches mit der zweiten Antriebsvorrichtung (15) in kraftübertragender weise in Verbindung steht und um die Wirkdrehachse (6) rotierbar ist, wobei das Wälzlager (37) an eine senkrecht zur Wirkdrehachse (9) verlaufendenden Seitenwand (44) der Außentrommel (7) angeflanscht ist.

4. Wirktrommelanordnung (3) nach Anspruch 3, **dadurch gekennzeichnet, dass** eine Außentrommel-Abtriebsscheibe (35) an das Wälzlager (37) angeflanscht ist, die durch die zweite Antriebsvorrichtung (15) über ein zweites Lastübertragungsmittel (36) in Rotation um die Wirkdrehachse (6) versetzbar ist.

5. Wirktrommelanordnung (3) nach einem der vorstehenden Ansprüche, **dadurch gekennzeichnet, dass** sich die dritte Antriebsvorrichtung (16) an eine von der Außentrommel (7) und von der Innentrommel (8) beabstandete erste Stirnwand (27) der Wirkwelle (9) anschließt und mit der ersten Stirnwand (27) zur linearen Bewegung der Wirkwelle (9) entlang der Wirkdrehachse (6) zusammenwirkt.

6. Wirktrommelanordnung (3) nach einem der vorstehenden Ansprüche, **dadurch gekennzeichnet, dass** die dritte Antriebsvorrichtung (16) als Linearaktor ausgebildet ist.

7. Wirktrommelanordnung (3) nach Anspruch 6, **dadurch gekennzeichnet, dass** die die dritte Antriebsvorrichtung (16) über einen Umlenkmechanismus (53) mit der Wirkwelle (9) verbunden ist, wobei der Umlenkmechanismus (53) einen Umlenkhebel (54) umfasst, der ein Stellglied (50) des Linearaktor (16) mit der Wirkwelle (9) verbindet.

8. Wirktrommelanordnung (3) nach einem der vorstehenden Ansprüche, **dadurch gekennzeichnet, dass** die Wirkwelle (9) als Keilwelle ausgebildet ist.

9. Wirktrommelanordnung (3) nach einem der vorstehenden Ansprüche, **dadurch gekennzeichnet, dass** jede der Antriebsvorrichtungen (14, 15, 16) eine eigene Energiequelle aufweist.

10. Wirktrommelanordnung (3) nach einem der vorstehenden Ansprüche, **dadurch gekennzeichnet, dass** die Steuerung der Antriebsvorrichtungen (14, 15, 16) in Abhängigkeit eines Gewichts der zu wirkenden Teiglinge erfolgt.

11. Wirktrommelanordnung (3) nach Anspruch 6, **dadurch gekennzeichnet, dass** die Steuer- und Regeleinrichtung den Linearaktor (16) ansteuert.

12. Wirkvorrichtung umfassend
a) eine Wirktrommelanordnung (3) nach einem der Ansprüche 1 bis 11 und
b) einem Förderband (5).

## Claims

1. Kneading drum assembly (3) for the treatment of dough comprising
a) an outer drum (7) rotatable around a kneading rotation axis (6) with intake recesses (10) to take in dough pieces,
b) an inner drum (8) mounted coaxially in the outer drum (7) and rotatable relative to same, wherein
c) the intake recesses (10) configure kneading chambers (13), as
i) the intake recesses (10) are limited inwards by an outer shell of the inner drum (8) and
are limited outwards upon kneading by a kneading strand (12) of a conveyor belt abutting on a circumferential section of the outer drum (6),
d) a kneading shaft (9) rotatable around the kneading rotation axis (6), which
i) is drivable in a rotating manner by a first driving device (14) and
ii) is in torque proof connection with the inner drum (8) and sets same in rotation around the kneading rotation axis (6),
e) a second driving device (15) for driving the outer drum (7) in a rotating manner around the kneading rotation axis (6), and
f) a controlling and regulating device, which coordinates at least two of the following quantities by controlling the driving devices:
- a rotational speed of the inner drum (8),
- a rotational speed of the outer drum (7) and
- an amplitude of an axial stroke of the inner drum (8),
**characterized in that** the kneading drum assembly
g) has a third driving device (16) for the linear movement of the kneading shaft (9) along the kneading rotation axis (6),
and **that**
h) the three driving devices (14, 15, 16) are drivable independently from one another.

2. Kneading drum assembly (3) according to claim 1, **characterized in that** an inner drum downforce disk (17) is connected with the kneading shaft (9) in a torque proof manner, which can be driven via a first load transmission means (18) by the first driving device (14) to a rotation movement around the kneading rotation axis (6).

3. Kneading drum assembly (3) according to claim 1 or 2, **characterized in that** a roller bearing (37) is arranged on the kneading shaft (9), which is connected with the second driving device (15) in a force transmitting manner and is rotatable around the kneading rotation axis (6), wherein the roller bearing (37) is flange-mounted to a side wall (44) of the outer drum (7), which runs perpendicularly to the kneading rotation axis (9).

4. Kneading drum assembly (3) according to claim 3, **characterized in that** an outer drum downforce disk (35) is flange-mounted to the roller bearing (37), which is displaceable by the second driving device (15) via a second load transmission means (36) in rotation around the kneading rotation axis (6).

5. Kneading drum assembly (3) according to any one of the preceding claims, **characterized in that** the third driving device (16) adjoins a first front wall (27) of the kneading shaft (9), spaced apart from the outer drum (7) and the inner drum (8), and interacts with the first front wall (27) for a linear movement of the of the kneading shaft (9) along the kneading rotation axis (6).

6. Kneading drum assembly (3) according to any one of the preceding claims, **characterized in that** the third driving device (16) is configured as a linear actuator.

7. Kneading drum assembly (3) according to claim 6, **characterized in that** the third driving device (16) is connected with the kneading shaft (9) via a deviation mechanism (53), wherein the deviation mechanism (53) comprises a deviation lever (54), which connects a controlling element (50) of the linear actuator (16) with the kneading shaft (9).

8. Kneading drum assembly (3) according to any one of the preceding claims, **characterized in that** the kneading shaft (9) is configured as a splined shaft.

9. Kneading drum assembly (3) according to any one of the preceding claims, **characterized in that** each one of the driving devices (14, 15, 16) has its own source of energy.

10. Kneading drum assembly (3) according to any one of the preceding claims, **characterized in that** controlling the driving devices (14, 15, 16) takes place depending on a weight of the dough pieces to be kneaded.

11. Kneading drum assembly (3) according to claim 6, **characterized in that** the controlling and regulating device actuates the linear actuator (16).

12. Kneading device, comprising
a) a kneading drum assembly (3) according to any one of claims 1 to 11 and
b) a conveyor belt (5).

## Revendications

1. Ensemble de tambours de pétrissage (3) pour le façonnage de pâte, comprenant
a) un tambour extérieur (7), rotatif autour d'un axe de rotation de pétrissage (6), avec
des renfoncements de réception (10) pour recevoir de pâtons,
b) un tambour intérieur (8) monté de manière coaxiale dans le tambour extérieur (7), et rotatif relatif à celui-ci,
c) les renfoncements de réception (10) configurant des chambres de pétrissage (13) par
i) les renfoncements de réception (10) étant limités vers l'intérieur par un enveloppe extérieur du tambour intérieur (8) et
vers l'extérieur lors du pétrissage par un tronçon de pétrissage (12) d'une bande transporteuse, étant placé contre une section circonférentielle du tambour extérieur (6),
d) un arbre de pétrissage (9) rotatif autour d'un axe de rotation de pétrissage (6), qui
i) peut être entraîné de manière rotative par un premier dispositif d'entraînement (14) et
ii) est lié de manière immobile en rotation avec le tambour intérieur (8) et met celui-ci en rotation atour de l'axe de rotation de pétrissage (6),
e) un deuxième dispositif d'entraînement (15) pour l'entraînement rotatif du tambour extérieur (7) autour de l'axe de rotation de pétrissage (6), et
f) un dispositif de commande et de réglage qui fait correspondre au moins deux des grandeurs suivantes en commandant les dispositifs d'entraînement :
- une vitesse de rotation du tambour intérieur (8),
- une vitesse de rotation du tambour extérieur (7) et
- une amplitude d'une course axiale du tambour intérieur (8),
**caractérisé en ce que** l'ensemble de tambours de pétrissage g)
présente un troisième dispositif d'entraînement (16) pour le mouvement linéaire de l'arbre de pétrissage (9) le long de l'axe de rotation de pétrissage (6),
et **que**
h) les trois dispositifs d'entraînement (14, 15, 16) peuvent être entraînés indépendamment l'un de l'autre.

2. Ensemble de tambours de pétrissage (3) selon la revendication 1, **caractérisé en ce qu'**un disque de prise de force du tambour intérieur (17) est lié à l'arbre de pétrissage (9) de manière immobile en rotation, ledit disque pouvant être entraîné via un premier moyen de transmission de charge (18) par le premier dispositif d'entraînement (14) à effectuer un mouvement de rotation atour de l'axe de rotation de pétrissage (6).

3. Ensemble de tambours de pétrissage (3) selon la revendication 1 ou 2, **caractérisé en ce qu'**un palier à rouleau (37) est disposé sur l'arbre de pétrissage (9), étant en liaison de manière transmetteuse avec le deuxième dispositif d'entraînement (15) et étant rotative autour de l'axe de rotation de pétrissage (6), ledit palier à rouleau (37) étant bridé sur une paroi latérale (44) du tambour extérieur (7) qui s'étend perpendiculairement à l'axe de rotation de pétrissage (9).

4. Ensemble de tambours de pétrissage (3) selon la revendication 3, **caractérisé en ce qu'**un disque de prise de force du tambour extérieur (35) est bridé sur le palier à rouleau (37), étant déplaçable par le deuxième dispositif d'entraînement (15) via un deuxième moyen de transmission de charge (36) en rotation autour de l'axe de rotation de pétrissage (6).

5. Ensemble de tambours de pétrissage (3) selon l'une quelconque des revendications précédentes, **caractérisé en ce que** le troisième dispositif d'entraînement (16) se joint à une première paroi frontale (27) de l'arbre de pétrissage (9), espacé du tambour extérieur (7) et du tambour intérieur (8), et interagit avec la première paroi frontale (27) pour le mouvement linéaire de l'arbre de pétrissage (9) le long de l'axe de rotation de pétrissage (6).

6. Ensemble de tambours de pétrissage (3) selon l'une quelconque des revendications précédentes, **caractérisé en ce que** le troisième dispositif d'entraînement (16) est configuré comme actuateur linéaire.

7. Ensemble de tambours de pétrissage (3) selon la revendication 6, **caractérisé en ce que** le troisième dispositif d'entraînement (16) est lié à l'arbre de pétrissage (9) via un mécanisme de déviation (53), le mécanisme de déviation (53) comprenant un levier de déviation (54) liant un actionneur (50) de l'actuateur linéaire (16) à l'arbre de pétrissage (9).

8. Ensemble de tambours de pétrissage (3) selon l'une quelconque des revendications précédentes, **caractérisé en ce que** l'arbre de pétrissage (9) est configuré comme arbre cannelé.

9. Ensemble de tambours de pétrissage (3) selon l'une quelconque des revendications précédentes, **caractérisé en ce que** chacun des dispositifs d'entraînement (14, 15, 16) présente une propre source d'énergie.

10. Ensemble de tambours de pétrissage (3) selon l'une quelconque des revendications précédentes, **caractérisé en ce que** la commande des dispositifs d'entraînement (14, 15, 16) se fait en fonction d'un poids des pâtons à pétrir.

11. Ensemble de tambours de pétrissage (3) selon la revendication 6, **caractérisé en ce que** le dispositif de commande et de réglage pilote l'actuateur linéaire (16).

12. Dispositif de pétrissage, comprenant
a) un ensemble de tambours de pétrissage (3) selon l'une quelconque des revendications 1 à 11 et
b) une bande transporteuse (5).
